# FASCICULE DE BREVET EUROPEEN

(11) **EP 1 606 865 B1**
(45) Date de publication et mention de la délivrance du brevet: **16.05.2007**
(21) Numéro de dépôt: 04742307.4
(22) Date de dépôt: 22.03.2004
(51) Int. Cl.: H02G 3/04

(54) **GAINE DE BLINDAGE ELECTRO-MAGNETIQUE NOTAMMENT POUR PROTEGER DES FAISCEAUX DE CABLES DANS L'AERONAUTIQUE**
ELEKTROMAGNETISCHER ABSCHIRMMANTEL, DER ZUM BEISPIEL KABELBÜNDEL FÜR DIE LUFTFAHRT SCHÜTZEN SOLL
ELECTROMAGNETIC SHIELDING SLEEVE WHICH IS INTENDED, FOR EXAMPLE, TO PROTECT BUNDLES OF CABLES FOR USE IN AERONAUTICS

(30) Priorité: 24.03.2003 FR 0303552
(43) Date de publication de la demande: 21.12.2005
(73) Titulaire: Federal Mogul Systems Protection Group, 60800 Crépy-en-Valois (FR)
(72) Inventeur: RODRIGUES, Thierry, F-95440 Ecouen (FR); LERNON, André, F-60890 Mareuil-Sur-Ourcq (FR); DUMONT, Fabrice, F-60200 Compiegne (FR); KOCH, Rainer, F-60129 Gilocourt (FR)
(74) Mandataire: Santarelli
(86) Numéro de dépôt international: PCT/FR2004/000695
(87) Numéro de publication internationale: WO 2004/086582

(56) Documents cités:
- FR-A- 1 509 648
- JP-A- 10 224 943
- JP-A- 11 121 969
- JP-A- 11 215 642
- US-A- 6 085 416

## Description

La présente invention concerne une gaine de blindage électro-magnétique utilisée notamment pour protéger des faisceaux de câbles électriques dans le domaine de l'aéronautique.

La présente invention s'applique de manière générale aux protections par blindage électro-magnétique des fils, câbles ou torons de fils, afin de protéger ces derniers des interférences électro-magnétiques et radiofréquences.

Ce type de protection électro-magnétique est utilisé couramment dans les domaines de l'automobile, du câblage ferroviaire ou encore dans l'aéronautique.

Des normes de protection aux interférences électro-magnétiques sont définies pour chaque domaine d'application, et peuvent à titre d'exemple requérir une protection par exemple de l'ordre de 40-45 db dans l'automobile, ou encore de l'ordre de 80-90 db dans le domaine de l'aéronautique.

On connaît par exemple dans le domaine de l'automobile des gaines auto-fermables en tissu polyester cuivré, ou nickelé, permettant d'obtenir une protection électro-magnétique.

La continuité électrique est assurée grâce à une zone de recouvrement sur l'extérieur de la gaine textile, au niveau de laquelle un bord longitudinal replié permet d'obtenir un contact cuivre contre cuivre.

Une telle gaine de protection est décrite dans le document EP 1 175 683 et dans le document JP11121969.

Cependant, une telle gaine ne peut offrir qu'une faible protection aux Interférences de telle sorte qu'elle est difficilement transposable au domaine de l'aéronautique.

En effet, dans ce domaine, un maximum d'efficacité en terme de blindage électro-magnétique est obtenu en utilisant des fils de cuivre, par exemple sous forme de tresse de cuivre.

Traditionnellement, on effectue un surtressage en fils de cuivre autour du faisceau de câbles à protéger, suivant un taux de couverture d'environ 75 % par exemple. Les taux de couverture requis dans le domaine de l'aéronautique vont souvent au-delà de 90 %.

Eventuellement, une couche supplémentaire, surtressée en fils textiles peut être réalisée afin d'obtenir une protection mécanique à la fois des câbles et du blindage en cuivre.

Cependant, ces blindages sont difficiles à mettre en place sur un faisceau de câbles.

En outre, la maintenance et le remplacement des éléments de blindage et de protection mécanique sont particulièrement difficiles, voire impossibles, lorsque les câbles sont montés et connectés en position opérationnelle.

La présente invention a pour but de résoudre les inconvénients précités et de proposer une gaine de blindage électro-magnétique permettant d'assurer un blindage efficace et à moindre coût, notamment dans le domaine de l'aéronautique.

A cet effet, la présente invention vise une gaine de blindage électro-magnétique de forme tubulaire et fendue longitudinalement comprenant un substrat et une couche d'un matériau électriquement conducteur fixée à une face interne du substrat, cette couche s'étendant sensiblement d'un bord à l'autre bord longitudinal du substrat.

Selon l'invention, en au moins un premier bord longitudinal du substrat, ce substrat et la couche en matériau électriquement conducteur sont désolidarisés sur une portion de dédoublement adaptée à loger un second bord longitudinal du substrat.

Cette portion de dédoublement forme ainsi un logement adapté à recevoir le second bord longitudinal du substrat, de telle sorte qu'une continuité électrique peut être assurée au niveau de la couche du matériau électriquement conducteur fixée d'un bord à l'autre du substrat.

Grâce à cette portion de dédoublement, la zone de continuité électrique peut être obtenue à l'intérieur même de la gaine, de telle sorte que cette zone de contact électrique est protégée sur l'extérieur de la gaine par le premier bord longitudinal du substrat.

En outre, grâce au substrat fendu longitudinalement, la mise en place et notamment le remplacement d'une gaine usagée peuvent être réalisés facilement, même lorsque les câbles sont positionnés dans leur application finale. Les opérations de maintenance et de « retro-fit » sont ainsi facilitées.

Selon un mode de réalisation préféré de l'invention, cette couche est formée d'une structure de fils de cuivre entrelacés, permettant d'obtenir une densité importante de cuivre propre à assurer un blindage efficace des câbles.

Une structure tressée en fils de cuivre peut permettre d'obtenir un fort taux de couverture par le matériau électriquement conducteur autour des câbles à protéger.

Selon une autre caractéristique préférée de l'invention, le substrat est réalisé sous la forme d'une feuille thermo-formée en bande auto-enroulable à recouvrement.

Ainsi, la mise en place et l'obtention d'une zone de recouvrement permettant d'assurer la continuité électrique au niveau de la portion de dédoublement de la gaine est grandement facilitée par la forme même du substrat.

Le second bord longitudinal de la gaine est ainsi adapté à être inséré entre le substrat et la couche d'un matériau électriquement conducteur dans la portion de dédoublement.

Cette gaine est particulièrement bien adaptée à protéger des faisceaux de câbles électriques dans l'aéronautique, mais peut également être utilisée dans les secteurs de l'automobile ou du domaine ferroviaire.

D'autres particularités et avantages de l'invention apparaîtront encore dans la description ci-après.

Aux dessins annexés, donnés à titre d'exemples non limitatifs :
- la figure 1 est une vue en perspective d'une gaine de blindage électro-magnétique conforme à l'invention ;
- la figure 2 est une vue d'extrémité d'une gaine de blindage électro-magnétique conforme à un premier mode de réalisation de l'invention ;
- la figure 3 est une vue en coupe transversale d'une gaine de blindage électro-magnétique conforme au premier mode de réalisation de l'invention, mise en place autour d'un faisceau de câbles ;
- la figure 4 est une vue d'extrémité d'une gaine de blindage électro-magnétique conforme à un deuxième mode de réalisation de l'invention ; et
- la figure 5 est une vue en coupe transversale d'une gaine de blindage électro-magnétique conforme au deuxième mode de réalisation de l'invention, mise en place autour d'un faisceau de câbles.

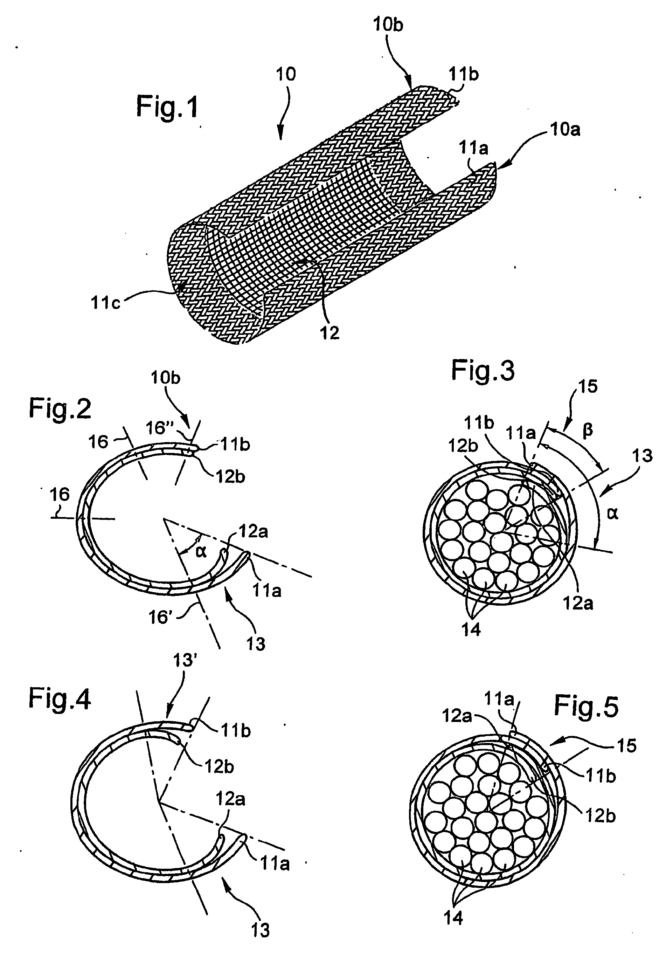

On va décrire tout d'abord en référence à la figure 1 le principe général d'une gaine de blindage électro-magnétique conforme à l'invention.

Cette gaine 10 a une forme générale de tube fendu.

Plus particulièrement, elle comprend ici un substrat 11 adapté à s'enrouler sur lui-même pour former un tube fendu longitudinalement.

De préférence, ce substrat est réalisé sous forme d'une feuille thermo-formée à partir d'une bande plane. L'opération de thermo-formage a pour effet de transformer la bande plane en une bande auto-enroulable à recouvrement, les bords longitudinaux 10a, 10b de la gaine étant adaptés à venir en contact l'un avec l'autre dans une portion de recouvrement.

De préférence, ce substrat est une bande tissée en textile. Les fils textiles utilisés peuvent être par exemple des mono-filaments et/ou des multifilaments en polyester.

A titre d'exemple, on peut utiliser des fils en polyphenylene sulphide (PPS).

Alternativement, un substrat peut être réalisé à partir de NOMEX^{®} commercialisé par la Société duPont de Nemours.

Ce substrat en PPS ou NOMEX^{®} permet de procurer une protection mécanique efficace aux câbles à protéger.

Un substrat en NOMEX^{®} présente en outre l'avantage d'avoir une bonne tenue au feu.

Conformément à l'invention, à ce substrat en textile 11 est associée une couche 12 réalisée à partir d'un matériau électriquement conducteur.

Cette couche 12 est de préférence formée à partir d'une tresse de fils de cuivre.

On peut ainsi utiliser du cuivre étamé ou nickelé, des fils de cuivre de diamètre compris entre 0,10 et 0,25 mm, et de préférence entre 0,12 et 0,15 mm, pouvant être tressés de manière à former une bande allongée de matériau conducteur.

La technique de tressage permet d'obtenir une bande dans laquelle le taux de couverture du cuivre est de l'ordre de 92 % de la surface totale de la bande.

Cette couche 12 de cuivre est fixée à une face interne 11 c du substrat, de manière à s'étendre d'un bord longitudinal 11a jusqu'à l'autre bord longitudinal 11 b du substrat 11.

Comme bien illustré à la figure 1, cette couche en matériau conducteur peut ne s'étendre que sur une portion longitudinale limitée de la gaine 10.

Bien entendu, cette couche 12 pourrait s'étendre également sur toute la longueur de la gaine 10.

Comme bien illustré sur la figure 2, dans un premier mode de réalisation, au niveau d'un premier bord longitudinal 11a du substrat 11, le substrat 11 et la couche 12 sont désolidarisés sur une portion de dédoublement 13.

Ainsi, dans cette portion de dédoublement 13, le second bord longitudinal 10b de la gaine peut être inséré entre le substrat 11 et la couche 12.

Cette portion de dédoublement 13 s'étend sur un secteur angulaire a suffisant pour permettre une Insertion suffisante du second bord longitudinal 10b dans cette portion de dédoublement 13.

A titre d'exemple, ce secteur angulaire a peut être sensiblement égal à 90°.

Comme bien illustré à la figure 3, lorsque cette gaine 10 est montée autour d'un faisceau de câbles 14, le second bord longitudinal 10b de la gaine 10 est inséré entre le substrat, et plus particulièrement entre le premier bord longitudinal 11 a de ce substrat, et la couche 12 de matériau conducteur de telle sorte qu'une continuité électrique peut être obtenue au niveau de cette couche 12, grâce au contact des bords longitudinaux 12a, 12b de la couche 12 en cuivre.

Il existe ainsi une portion de recouvrement 15 d'un bord longitudinal 10a sur l'autre bord longitudinal 10b de la gaine 10. Cette portion de recouvrement 15 s'étend sur un secteur angulaire β dont la valeur peut être comprise entre 60 et 90° autour de l'axe longitudinal du substrat 11 de forme tubulaire.

Cette portion de recouvrement 15 est plus ou moins importante suivant le diamètre des câbles 14 à protéger, l'important étant d'avoir un bon contact entre les deux bords longitudinaux.

On va décrire en référence aux figures 4 et 5 un second mode de réalisation de la gaine de blindage électro-magnétique conforme à l'invention.

Dans cet exemple, le substrat 11 et la couche 12 en matériau électriquement conducteur sont désolidarisés sur deux portions de dédoublement 13 et 13', l'une de ces portions de dédoublement 13 étant adjacente au premier bord longitudinal 10a de la gaine 10 et l'autre portion de dédoublement 13' étant adjacente au second bord longitudinal 10b de la gaine.

Ainsi, comme bien illustré à figure 5, ces portions de dédoublement 13, 13' sont adaptées à s'entrecroiser dans une portion de recouvrement 15' de telle sorte que les bords 12a, 12b de la couche conductrice viennent en contact l'un contre l'autre à l'intérieur de la gaine, et les bords longitudinaux 11a, 11b du substrat viennent en contact l'un sur l'autre sur l'extérieur de la gaine.

Ainsi, dans les deux modes de réalisation décrits précédemment, la continuité électrique au niveau de la couche 12 en matériau conducteur est réalisée à l'intérieur de la gaine 10, le substrat 11 venant recouvrir cette portion de contact de manière à protéger mécaniquement cette jonction électrique.

On obtient ainsi un blindage sur et efficace, propre à équiper des faisceaux de câbles dans l'aéronautique.

Cette gaine de blindage électro-magnétique peut être fabriquée par exemple en cousant la couche en matériau électriquement conducteur 12 sur le substrat 11 grâce à une ou plusieurs lignes de couture 16, 16', 16" s'étendant dans la direction longitudinale de la gaine 10.

Au moins une des lignes de couture 16' est suffisamment éloignée d'un bord longitudinal 10a de la gaine de la manière à permettre la désolidarisation du substrat et de la couche 12 à proximité de ce bord longitudinal.

Lorsque le substrat est une bande tissée en textile thermo-formé, la tresse de cuivre est fixée par des lignes de couture sur la bande tissée en textile avant l'étape de thermo-formage.

Alternativement, cette gaine pourrait être obtenue par un procédé de tissage tubulaire, une couche étant réalisée en fils de cuivre et une couche en fils de textiles. Un tel procédé de tissage double permettrait de supprimer une opération de fixation de la couche en cuivre sur la couche en fils textiles lors de la fabrication de la gaine.

La gaine de blindage électro-magnétique conforme à l'invention permet ainsi de procurer un blindage efficace et simple à mettre en oeuvre autour de câbles à protéger, même lorsque ces derniers sont montés et raccordés dans un moteur par exemple.

Bien entendu, de nombreuses modifications peuvent être apportées à l'exemple de réalisation décrit précédemment sans sortir du cadre de l'invention.

En particulier, dans le second mode de réalisation dans lequel une portion de dédoublement est prévue sur les deux bords longitudinaux de la gaine, l'un des bords longitudinaux, comprenant à la fois le substrat et la couche en matériau électriquement conducteur, peut être Inséré Intégralement entre le substrat et la couche en matériau conducteur de l'autre bord longitudinal.

Par ailleurs, les bords 12a, 12b de la couche 12 en matériau électriquement conducteur peuvent s'étendre plus ou moins jusqu'aux bords longitudinaux 11a, 11b du substrat 11, dès lors qu'il suffit d'obtenir une faible zone de recouvrement des deux bords 12a, 12b de la couche en matériau électriquement conducteur pour assurer une continuité électrique.

En outre, la gaine tubulaire pourrait ne pas être formée d'une bande auto-enroulable mais d'une bande plane susceptible d'être enroulée autour d'un faisceau de câbles et maintenue dans cette position par des moyens de fixation, tels que des colliers ou bagues, répartis dans la longueur de la gaine.

Par ailleurs, le substrat peut être formé d'une bande textile tricotée ou tressée.

De même, la couche en matériau conducteur pourrait être réalisée à partir de fils de cuivre tissés.

## Revendications

1. Gaine de blindage électro-magnétique de forme tubulaire et fendue longitudinalement comprenant un substrat (11) et une couche (12) d'un matériau électriquement conducteur fixée à une face interne (11c) du substrat (11), ladite couche (12) s'étendant sensiblement d'un bord (11a) à l'autre bord longitudinal (11 b) du substrat (11), **caractérisée en ce qu'**en au moins un premier bord longitudinal (11a) du substrat (11) et ladite couche (12) sont désolidarisés sur une portion de dédoublement (13) adaptée à loger un second bord longitudinal (11 b) du substrat (11).

2. Gaine de blindage électro-magnétique conforme à la revendication 1, **caractérisée en ce que** ladite couche (12) est formée d'une structure de fils de cuivre entrelacées.

3. Gaine de blindage électro-magnétique conforme à la revendication 2, **caractérisée en ce que** ladite couche (12) est formée d'une tresse de fils de cuivre.

4. Gaine de blindage électro-magnétique conforme à l'une des revendications 1 à 3, **caractérisée en ce que** ledit substrat (11) est réalisé sous la forme d'une feuille thermo-formée en bande auto-enroulable à recouvrement.

5. Gaine de blindage électro-magnétique conforme à l'une des revendications 1 à 4, **caractérisée en ce que** ledit substrat (11) est une bande textile.

6. Gaine de blindage électro-magnétique conforme à l'une des revendications 1 à 5, **caractérisée en ce que** ledit substrat (11) est un textile tissé.

7. Gaine de blindage électro-magnétique conforme à l'une des revendications 1 à 6, **caractérisée en ce** ladite couche en matériau électriquement conducteur (12) est fixée audit substrat (11) par une ou plusieurs lignes de couture (16, 16', 16") s'étendant dans la direction longitudinale de ladite gaine (10).

8. Gaine de blindage électro-magnétique conforme à l'une des revendications 1 à 7, **caractérisée en ce** ladite portion de dédoublement (13) s'étend sur un secteur angulaire (α) environ égal à 90°.

9. Gaine de blindage éloctro-magnétique conforme à l'une des, revendications 1 à 8, **caractérisée en ce qu'**une portion de recouvrement (15) d'un bord longitudinal (10a) sur l'autre bord longitudinal (10b) de la gaine (10) s'étend sur un secteur angulaire (β) compris entre 60 et 90°.

10. Gaine de blindage électro-magnétique conforme à l'une des revendications 1 à 9, **caractérisée en ce qu'**un second bord longitudinal (10b) de ladite gaine (10) est adapté à être inséré entre ledit substrat (11) et ladite couche (12) dans la portion de dédoublement (13).

11. Gaine de blindage électro-magnétique conforme à l'une des revendications 1 à 9, **caractérisée en ce que** le substrat (11) et ladite couche (12) sont désolidarisés sur des portions de dédoublement (13, 13') adjacentes respectivement audit premier (10a) et audit second bord longitudinal (10b) de ladite gaine (10).

12. Gaine de blindage électro-magnétique conforme à l'une des revendications 5 ou 6, **caractérisée en ce que** les fils textiles sont des mono filaments et/ou des multifilaments.

13. Gaine de blindage électro-magnétique conforme à la revendication 12, **caractérisée en ce que** les fils textiles sont en polyester.

14. Utilisation d'une gaine de blindage conforme à l'une des revendications 1 à 13, notamment pour protéger des faisceaux de câbles électriques (14) dans l'aéronautique.

## Claims

1. Longitudinally slit tubular electromagnetic shielding sleeve comprising a substrate (11) and an electrically conductive material layer (12) fixed to an internal face (11c) of the substrate (11), said layer (12) extending substantially from one longitudinal edge (11a) of the substrate (11) to the other longitudinal edge (11b) thereof, **characterised in that** the substrate (11) and said layer (12) are separated in a split segment (13) at one first longitudinal edge (11a) of the substrate (11) at least which is adapted to house a second longitudinal edge (11b) of the substrate (11).

2. Electromagnetic shielding sleeve according to claim 1, **characterised in that** said layer (12) is formed of an interleaved copper wire structure.

3. Electromagnetic shielding sleeve according to claim 2, **characterised in that** said layer (12) is formed of braided copper wires.

4. Electromagnetic shielding sleeve according to any one of claims 1 to 3, **characterised in that** said substrate (11) is produced in the form of a sheet thermoformed into a self-curling strip with an overlap.

5. Electromagnetic shielding sleeve according to any one of claims 1 to 4, **characterised in that** said substrate (11) is a textile strip.

6. Electromagnetic shielding sleeve according to any one of claims 1 to 5, **characterised in that** said substrate is a woven textile.

7. Electromagnetic shielding sleeve according to any one of claims 1 to 6, **characterised in that** said electrically conductive material layer (12) is fixed to said substrate (11) by one or more rows of stitches (16, 16', 16") extending in the longitudinal direction of said sleeve (10).

8. Electromagnetic shielding sleeve according to any one of claims 1 to 7, **characterised in that** said split segment (13) subtends an angle (α) approximately equal to 90°.

9. Electromagnetic shielding sleeve according to any one of claims 1 to 8, **characterised in that** an overlap portion (15) of one longitudinal edge (10a) of the sleeve (10) on the other longitudinal edge (10b) thereof subtends an angle (β) from 60° to 90°.

10. Electromagnetic shielding sleeve according to any one of claims 1 to 9, **characterised in that** a second longitudinal edge (10b) of said sleeve (10) is adapted to be inserted between said substrate (11) and said layer (12) in the split segment (13).

11. Electromagnetic shielding sleeve according to any one of claims 1 to 9, **characterised in that** the substrate (11) and said layer (12) are separated over split segments (13, 13') respectively adjacent to said first longitudinal edge (10a) of said sleeve (10) and to said second longitudinal edge (10b) thereof.

12. Electromagnetic shielding sleeve according to claim 5 or claim 6, **characterised in that** the textile filaments are monofilaments and/or multifilaments.

13. Electromagnetic shielding sleeve according to claim 12, **characterised in that** the textile filaments are made from polyester.

14. Use of a shielding sleeve according to any one of claims 1 to 13, in particular to protect bundles of electrical cables (14) in the field of aeronautics.

## Patentansprüche

1. Rohrförmiger und längsgeschlitzter elektromagnetischer Abschirmungsmantel, mit einem Substrat (11) und einer Schicht (12) aus elektrisch leitendem Material, die an einer Innenseite (11c) des Substrats (11) befestigt ist, wobei die Schicht (12) sich im Wesentlichen von einem Längsrand (11a) zum anderen Längsrand (11b) des Substrats (11) erstreckt, **dadurch gekennzeichnet, dass** an mindestens einem ersten Längsrand (11a) des Substrats (11) das Substrat (11) und die Schicht (12) in einem Spaltungsabschnitt (13) voneinander gelöst sind, der ausgelegt ist, um einen zweiten Längsrand (11b) des Substrats (11) aufzunehmen.

2. Elektromagnetischer Abschirmungsmantel nach Anspruch 1, **dadurch gekennzeichnet, dass** die Schicht (12) von einer Struktur aus verflochtenen Kupferdrähten geformt wird.

3. Elektromagnetischer Abschirmungsmantel nach Anspruch 2, **dadurch gekennzeichnet, dass** die Schicht (12) von einer Litze aus Kupferdrähten geformt wird.

4. Elektromagnetischer Abschirmungsmantel nach einem der Ansprüche 1 bis 3, **dadurch gekennzeichnet, dass** das Substrat (11) in Form einer wärmegeformten Folie in einem selbstaufrollenden Band mit Überdeckung hergestellt wird.

5. Elektromagnetischer Abschirmungsmantel nach einem der Ansprüche 1 bis 4, **dadurch gekennzeichnet, dass** das Substrat (11) ein Textilband ist.

6. Elektromagnetischer Abschirmungsmantel nach einem der Ansprüche 1 bis 5, **dadurch gekennzeichnet, dass** das Substrat (11) ein gewebtes Textilmaterial ist.

7. Elektromagnetischer Abschirmungsmantel nach einem der Ansprüche 1 bis 6, **dadurch gekennzeichnet, dass** die Schicht aus elektrisch leitendem Material (12) am Substrat (11) durch eine oder mehrere Formnähte (16, 16', 16") befestigt ist, die sich in Längsrichtung des Mantels (10) erstrecken.

8. Elektromagnetischer Abschirmungsmantel nach einem der Ansprüche 1 bis 7, **dadurch gekennzeichnet, dass** der Spaltungsabschnitt (13) sich über einen Winkelsektor (α) im Wesentlichen gleich 90° erstreckt.

9. Elektromagnetischer Abschirmungsmantel nach einem der Ansprüche 1 bis 8, **dadurch gekennzeichnet, dass** ein Überlappungsabschnitt (15) eines Längsrands (10a) über den anderen Längsrand (10b) des Mantels (10) sich über einen Winkelsektor (β) zwischen 60 und 90° erstreckt.

10. Elektromagnetischer Abschirmungsmantel nach einem der Ansprüche 1 bis 9, **dadurch gekennzeichnet, dass** ein zweiter Längsrand (10b) des Mantels (10) ausgelegt ist, um zwischen das Substrat (11) und die Schicht (12) in den Spaltungsabschnitt (13) eingefügt zu werden.

11. Elektromagnetischer Abschirmungsmantel nach einem der Ansprüche 1 bis 9, **dadurch gekennzeichnet, dass** das Substrat (11) und die Schicht (12) in dem ersten (10a) bzw. dem zweiten Längsrand (10b) des Mantels (10) benachbarten Spaltungsabschnitten (13, 13') voneinander gelöst sind.

12. Elektromagnetischer Abschirmungsmantel nach einem der Ansprüche 5 oder 6, **dadurch gekennzeichnet, dass** die Textilfäden Einzelfäden und/oder Mehrfachfäden sind.

13. Elektromagnetischer Abschirmungsmantel nach Anspruch 12, **dadurch gekennzeichnet, dass** die Textilfäden aus Polyester sind.

14. Verwendung eines Abschirmungsmantels nach einem der Ansprüche 1 bis 13, insbesondere zum Schutz der Elektrokabelbündel (14) in der Luftfahrt.
